# EUROPEAN PATENT SPECIFICATION

(11) **EP 0 988 796 B1**
(45) Date of publication and mention of the grant of the patent: **19.11.2003**
(21) Application number: 99203087.4
(22) Date of filing: 21.09.1999
(51) Int. Cl.: A23L 1/236, A23L 2/60

(54) **Sweetening tablet**
Süssstofftablette
Comprimé édulcorant

(30) Priority: 21.09.1998 NL 1010135
(43) Date of publication of application: 29.03.2000
(73) Proprietor: Sara Lee/DE N.V., 3532 AA Utrecht (NL)
(72) Inventor: Renkens, Annemarie Johanna Maria, 3448 DZ Woerden (NL)
(74) Representative: Prins, Adrianus Willem

(56) References cited:
- WO-A-98/04156
- GB-A- 1 523 931
- GB-A- 2 185 674

## Description

This invention relates to a sweetener composition, preferably in the form of a sweetener tablet, based on a mixture of sweeteners, having improved taste, more particularly with regard to the resemblance to sugar.

It is known that artificial sweeteners, for improving the taste, are often used in combinations of two or more of them, the aim being especially to obtain a taste resembling that of sugar as closely as possible, without involving unpleasant off-tastes.

The British patent application 2 185 674 discloses a sweetening composition for farm animal rearing. The composition comprises a major proportion of at least one high intensity sweetener and a minor portion of thaumatin, the ratio of high intensity sweetener to thaumatin being over 20: 1 and such that when used to provide a palatable degree of sweetness in drinking water. The sweetened water will contain no more than 5 ppm of thaumatin. The high intensity sweetener provides substantially all the sweetness and is preferably chosen from the group of saccharin, acesulpham-K, stevioside, sodium cyclamate, dihydochalcones and sucralose.

The British patent application 1 523 931 discloses a sweetening composition containing protein sweeteners intended for human consumption. The disclosed composition comprises a protein sweetener together with a taste modifier which is at least L-gulose, D-fucose, xylitol, D-arabitol, lactulose, glucoheptose, D(+)-galactose, and its derivative D(+)-galactosamine or a salt thereof. The protein sweetener is preferably thaumatin or monellin.

Known products are based, for instance, on combinations of saccharin and sodium cyclamate. Although such combinations already provide a good taste, there remains a need for sweeteners having a taste still closer to that of sugar.

An object of the invention is therefore to provide a sweetener combination based on saccharin, sodium cyclamate, having an improved taste, more particularly a softer taste, so that the sweetener in human use for sweetening beverages and/or foods, for instance in coffee or tea, resembles sugar more.

This object and other objects are achieved by a combination of saccharin, cyclamate and thaumatin, comprising:
5 - 10 parts by weight of saccharin and/or sodium saccharin,
50 - 100 parts by weight of sodium cyclamate,
0.001 - 0.1 parts by weight of thaumatin,
wherein the weight ratio of sodium cyclamate to saccharin and/or sodium saccharin is between 8 and 15.

The sweetener composition according to the invention can be a sweetener tablet or a liquid sweetener (aqueous solution). A tablet preferably has a weight of 50 - 80 mg.

Surprisingly, it has been found that such compositions give a clear improvement of the body and mouthfeel upon human consumption, for instance in coffee and tea.

The essence of the invention resides in the combination of three sweeteners, while thaumatin is present in an amount which is below the taste threshold but which does contribute to a softening and rounding of the taste. More particularly in coffee, this taste improvement is clearly manifest.

It is noted that thaumatin is a natural protein (E 957).

Thaumatin can be used as such, but a suitable form of use is a mixture of 10% by weight of thaumatin and 90% by weight of maltodextrin. It is also possible to use thaumatin in a combination with gum arabic in a weight ratio of 1:9.

The tablet according to the invention also contains filler.

As filler, food-approved fillers are used, more particularly lactose, isomers and derivatives thereof, inulin, isomalt and/or oligofructose. Preferred is lactose or Tablettose™. The latter is a directly compressible milk sugar, especially suitable for tabletting.

There is a preference for the following composition in percent by weight :

| | |
|---|---|
| Sodium cyclamate | 50-80 |
| Saccharin | 5-9 |
| Thaumatin | 0.1-0.001 |
| Na-carbonate | 1-3 |
| lactose | 1-3 |
| mono-Na-citrate | 6-10 |
| Na-bicarbonate | 10-30 |

In a liquid composition, principally an aqueous solution of the three components mentioned is used, optionally in combination with conventional additives for improving stability, taste and storage life. Examples of such additives are fructose, citric acid, and sorbic acid.

Preferred compositions for aqueous solutions are, in percent by weight:

| | |
|---|---|
| Sodium cyclamate | 5-15 |
| Saccharin | 0.5-2 |
| Thaumatin | 0.006-0.00006 |
| Fructose | 0.1-0.3 |
| Citric acid | 0.01-0.1 |
| Sorbic acid | 0.01-0.1 |
| Water to | 100 |

According to the invention, as sweetener combination, inter alia sodium cyclamate and saccharin in the specified ratio are used. At these values, an optimum taste and sweetening strength are obtained. The relative ratio is obviously influenced by the choice of the saccharin component. If the free acid is used, the ratio is preferably from 10 to 15, whereas this ratio is preferably between 8 and 12 if the sodium salt is used. Saccharin can be present as such, or in the form of the sodium salt. From the viewpoint of solubility, the sodium salt is preferred.

Most preferred for a composition of a tablet according to the invention is a composition based on sodium cyclamate, sodium saccharin, thaumatin, lactose as filler, and sodium carbonate and sodium bicarbonate as disintegrators.

The tablets according to the invention preferably have a weight in the range of from 45 to 75 mg per tablet. In combination with the contents of sweeteners in their relative ratios, such a tablet weight gives an ideal dosage of the sweeteners.

The invention will now be elucidated in and by the following examples.

### EXAMPLES

On the basis of two formulations, a tablet and a liquid sweetener were manufactured. In this example, all amounts are expressed in percent by weight.

### Formulation 1 (tablet 64 mg)

| | |
|---|---|
| Sodium cyclamate | 60.8 |
| Saccharin | 5.06 |
| Thaumatin | 0.01 |
| Maltodextrin | 0.09 |
| Na-carbonate | 2.03 |
| lactose | 1.57 |
| mono-Na-citrate | 8.27 |
| Na-bicarbonate | 22.17 |

### Formulation 2 (liquid sweetener)

| | |
|---|---|
| Sodium cyclamate | 11.1 |
| Saccharin | 1.14 |
| Thaumatin | 0.0006 |
| Maltodextrin | 0.0054 |
| Fructose | 0.19 |
| Citric acid | 0.048 |
| Sorbic acid | 0.048 |
| Water to | 100 |

Upon use of these sweeteners in coffee, a clear improvement of the taste in comparison with compositions without thaumatin was observed.

## Claims

1. Use of a sweetener composition for sweetening beverages and/or foods for human consumption, which sweetener composition is based on a combination of saccharin, cyclamate and thaumatin, comprising:
5 - 10 parts by weight of saccharin and/or sodium saccharin,
50 - 100 parts by weight of sodium cyclamate,
0.001 - 0.1 parts by weight of thaumatin,
wherein the weight ratio of sodium cyclamate to saccharin and/or sodium saccharin is between 8 and 15.

2. A sweetener composition for use as defined in claim 1, having the form of a tablet, including a filler selected from the group consisting of lactose, derivatives of lactose, inulin, isomalt, oligofructose and combinations thereof.

3. A sweetener composition according to claim 2, wherein as filler, lactose or an isomer thereof is used.

4. A sweetener composition according to claims 2-3, having the following composition in percent by weight:
| | |
|---|---|
| Sodium cyclamate | 50-80 |
| Saccharin | 5-9 |
| Thaumatin | 0.1-0.001 |
| Na-carbonate | 1-3 |
| lactose | 1-3 |
| mono-Na-citrate | 6-10 |
| Na-bicarbonate | 10-30 |

5. A sweetener composition according to claims 3-5, wherein the weight of the tablet is between 50 and 80 mg.

6. A sweetener composition for use as defined in claim 1, having the form of an aqueous solution of the following composition in percent by weight:
| | |
|---|---|
| Sodium cyclamate | 5-15 |
| Saccharin | 0.5-2 |
| Thaumatin | 0.006-0.00006 |
| Fructose | 0.1-0.3 |
| Citric acid | 0.01-0.1 |
| Sorbic acid | 0.01-0.1 |
| Water to | 100. |

## Patentansprüche

1. Verwendung einer Süßstoff-Zusammensetzung zum Süßen von Getränken und/oder Lebensmitteln für den menschlichen Verbrauch, wobei die Süßstoff-Zusammensetzung auf einer Kombination von Saccharin, Cyclamat und Thaumatin basiert, umfassend:
5-10 Gewichtsteile Saccharin und/oder Natriumsaccharin,
50-100 Gewichtsteile Natriumcyclamat,
0,001-0,1 Gewichtsteile Thaumatin,
wobei das Gewichtsverhältnis von Natriumcyclamat zur Saccharin und/oder Natriumsaccharin zwischen 8 und 15 liegt.

2. Süßstoff-Zusammensetzung für die in Anspruch 1 definlerte Verwendung, die die Form eine Tablette aufweist, einschließend einen Füllstoff, der ausgewählt wird aus der aus Lactose, Derivaten von Lactose, Inulin, Isomalt, Oligrofructose und Kombinationen davon bestehenden Gruppe.

3. Süßstoff-Zusammensetzung nach Anspruch 2, wobei als Füllstoff Lactose oder ein Isomer davon verwendet wird.

4. Süßstoff-Zusammensetzung nach den Ansprüchen 2 bis 3, welche die folgende Zusammensetzung in Gewichts-% aufweist:
| | |
|---|---|
| Natriumcyclamat | 58-80 |
| Saccharin | 5-9 |
| Thaumatin | 0,1-0,001 |
| Na-Carbonat | 1-3 |
| Lactose | 1-3 |
| Mono-Na-Citrat | 6-10 |
| Na-Bicarbonat | 10-30 |

5. Süßstoff-Zusammensetzung nach den Ansprüchen 3 bis 5, wobei das Gewicht der Tablette zwischen 50 und 80 mg liegt.

6. Süßstoff-Zusammensetzung für die in Anspruch 1 definierte Verwendung, welche die Form einer wässrigen Lösung der folgenden Zusammensetzung in Gewichts-% aufweist;
| | |
|---|---|
| Natriumcylamat | 5-15 |
| Saccharin | 0.5-2 |
| Thaumatin | 0,006-0,00006 |
| Fructose | 0,1-0,3 |
| Zitronensäure | 0,01-0,1 |
| Sorbinsäure | 0,01-0,1 |
| Wasser auf | 100. |

## Revendications

1. Utilisation d'une composition édulcorante pour édulcorer des boissons et/ou des aliments pour la consommation humaine, laquelle composition édulcorante est basée sur une combinaison de saccharine, cyclamate et thaumatine, comprenant :
5-10 parties en poids de saccharine et/ou de saccharinate de sodium,
50-100 parties en poids de cyclamate de sodium,
0,001-0,1 parties en poids de thaumatine,
dans laquelle le rapport en poids de cyclamate de sodium sur la saccharine ou le saccharinate de sodium est entre 8 et 15.

2. Composition édulcorante pour une utilisation selon la revendication 1, ayant la forme d'une tablette, incluant un agent de remplissage choisi dans le groupe comprenant le lactose, des dérivés de lactose, inuline, isomalt, oligofructose et des combinaisons d'entre eux.

3. Composition édulcorante selon la revendication 2, dans laquelle en tant qu'agent de remplissage, le lactose ou un isomère de celui-ci est utilisé.

4. Composition édulcorante selon les revendications 2-3, ayant la composition suivante en pourcentage en poids :
| | |
|---|---|
| Cyclamate de sodium | 50-80 |
| Saccharine | 5-9 |
| Thaumatine | 0,1-0,001 |
| Carbonate de Na | 1-3 |
| Lactose | 1-3 |
| Monocitrate de Na | 6-10 |
| Bicarbonate de Na | 10-30 |

5. Composition édulcorante selon les revendications 3-5, dans laquelle le poids de la tablette est entre 50 et 80 mg.

6. Composition édulcorante pour une utilisation selon la revendication 1, ayant la forme d'une solution aqueuse de composition suivante en pourcentage en poids :
| | |
|---|---|
| Cyclamate de sodium | 5-15 |
| Saccharine | 0,5-2 |
| Thaumatine | 0,006-0,00006 |
| Fructose | 0,1-0,3 |
| Acide citrique | 0,01-0,1 |
| Acide sorbique | 0,01-0,1 |
| Eau jusqu'à | 100 |
